# EUROPEAN PATENT APPLICATION

(11) **EP 4 751 804 A1**
(43) Date of publication of application: **03.06.2026**
(21) Application number: 24845245.0
(22) Date of filing: 14.06.2024
(51) Int. Cl.: B01J 20/08, B01D 53/50, B01D 53/56, B01D 53/68, B01D 53/82, B01J 20/28

(54) **ACID GAS TREATMENT AGENT AND ACID GAS TREATMENT METHOD**

(30) Priority: 25.07.2023 JP 2023120841
(71) Applicant: Kurita Water Industries Ltd., Tokyo 164-0001 (JP); Sakai Chemical Industry Co., Ltd., Sakai-shi, Osaka 590-8502 (JP); Tohoku University, Sendai-shi, Miyagi 980-8577 (JP)
(72) Inventor: MORI, Kouichi, Tokyo 164-0001 (JP); ITOU, Ichirou, Tokyo 164-0001 (JP); TAKETSUNA, Hirotaka, Sakai-shi, Osaka 590-0985 (JP); SUZUKI, Masahiro, Sakai-shi, Osaka 590-0985 (JP); YOSHIOKA, Toshiaki, Sendai-shi, Miyagi 980-8577 (JP); KAMEDA, Tomohito, Sendai-shi, Miyagi 980-8577 (JP)
(74) Representative: TBK
(86) International application number: PCT/JP2024/021757
(87) International publication number: WO 2025/022863

(57) **Abstract**

There are provided an acid gas treatment agent and a method for treating acid gas which use a Mg-Al layered double hydroxide that has high adsorption capability to acidic substances and long breakthrough time in order to reduce the frequency of regeneration treatment of the treatment agent. The acid gas treatment agent of the present invention includes the Mg-Al layered double hydroxide having a mean pore size of 30 nm or larger as measured by a nitrogen gas adsorption method and a sulfate ion content of 1% by mass or lower.

## Description

### Technical Field

The present invention relates to an acid gas treatment agent and a method for treating acid gas to reject acidic substances such as hydrogen chloride, sulfur oxide and nitrogen oxide in combustion exhaust gases.

### Background Art

Combustion exhaust gases generated in thermal power generation, waste incineration and the like contain hazardous acidic substances such as hydrogen chloride, sulfur oxide (SOₓ) and nitrogen oxide (Noₓ). Hence, on acid gases containing the acidic substances, the treatment to reject the acidic substances by various methods have been carried out.

With regard to a treatment method for rejecting such acidic substances, the present applicants propose, as an efficient treatment technology capable of simultaneously treating a plurality of acidic substances, a treatment method, a treatment agent and the like of acid exhaust gas utilizing a Mg-Al layered double hydroxide (hereinafter, layered double hydroxide is abbreviated to LDH (Layered Double Hydroxide) in some cases) (see PTL1, and NPLs 1 and 2).

For example, NPL1 discloses that a carbonate-type Mg-Al LDH can efficiently reject hydrogen chloride gas, and a carbonate-type Mg-Al LDH slurry can reject not only hydrogen chloride gas but also sulfur oxide gas. NPL2 discloses that by increasing the amount of a carbonate-type Mg-Al LDH, the rejection rate of hydrogen chloride gas increases.

The present applicants further propose a system of regenerating a used treatment agent of Mg-Al LDH and repeatedly utilizing the treatment agent (see PTLs 2 and 3).

PTL2 proposes an onsite regeneration method using a treated exhaust gas for the regeneration; and PTL3 proposes a treatment method of acid exhaust gas and a regeneration method of a used treatment agent using a hydroxide-type Mg-Al LDH.

### Citation List

### Patent Literature

PTL1: JP 6954569 B
PTL2: JP 6898627 B
PTL3: JP 7130197 B

### Non Patent Literature

NPL1: Journal of the Society of Inorganic Materials, 2014, Vol.21, p.197-203
NPL2: Atmospheric Pollution Research, 2020, Vol.11, Issue 2, p.290-295

### Summary of Invention

### Technical Problem

Conventional Mg-Al LDHs used for treatment of acid exhaust gases do not always have high adsorption capability of acidic substances such as nitrogen oxide and sulfur oxide, and reach saturation fast, and require regeneration treatment at a high frequency and thus heavy burden of effort and cost for the regeneration treatment process.

Hence, in order to enhance the adsorption capability of the acidic substances in acid exhaust gases and reduce the frequency of the regeneration treatment, a Mg-Al LDH that has long breakthrough time is demanded.

The present invention has been achieved in order to solve such a problem, and has an object to provide an acid gas treatment agent and a method for treating acid gas which use a Mg-Al LDH that has high adsorption capability to acidic substances and long breakthrough time in order to reduce the frequency of the regeneration treatment of the treatment agent.

### Solution to Problem

The present invention is based on the finding that due to that the mean pore size and the sulfate ion content of a Mg-Al LDH are in predetermined ranges, an acid gas treatment agent that has high adsorption capability to acidic substances and long breakthrough time can be obtained.

The present invention provides the following means.
[1] An acid gas treatment agent, comprising a Mg-Al layered double hydroxide having a mean pore size of 30 nm or larger as measured by a nitrogen gas adsorption method and a sulfate ion content of 1% by mass or lower.
[2] The acid gas treatment agent according to [1], wherein the Mg-Al layered double hydroxide is of carbonate type or hydroxide type.
[3] The acid gas treatment agent according to [1] or [2], wherein an element molar ratio of Mg to Al of the Mg-Al layered double hydroxide is 2 to 3.
[4] The acid gas treatment agent according to any one of [1] to [3], wherein the Mg-Al layered double hydroxide has a cumulative volume 50% particle diameter D50 of 13.0 to 16.0 µm and a ratio (D90/D10) of a cumulative volume 90% particle diameter D90 to a cumulative volume 10% particle diameter D10 of 55 to 75.
[5] A molded article, comprising the acid gas treatment agent according to any one of [1] to [4].
[6] A method for treating acid gas, comprising contacting the acid gas treatment agent according to any one of [1] to [4] or the molded article according to [5] with an acid gas comprising an acidic substance to reject the acidic substance.

### Advantageous Effects of Invention

According to the present invention, there are provided an acid gas treatment agent and a method for treating acid gas which use a Mg-Al LDH that has high adsorption capability to acidic substances and long breakthrough time. Thus, according to the present invention, the frequency of regeneration treatment of the acid gas treatment agent can be reduced, and the rejection efficiency of the acidic substances in the acid gas can be enhanced.

### Brief Description of Drawing

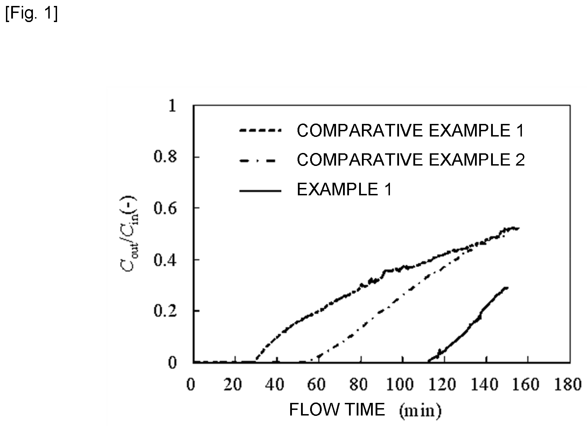

[Fig. 1] Fig. 1 is a graph showing breakthrough curves in an acid gas adsorption test in Examples.

### Description of Embodiments

In the present description, a numerical range indicated by using "to" means that whose lower limit value and upper limit value are numerical values before and after the "to", respectively. A preferable numerical range can be set by optionally combining a preferable lower limit value and upper limit value.

The acid gas treatment agent of the present invention comprises a Mg-Al LDH having a mean pore size of 30 nm or larger as measured by a nitrogen gas adsorption method and a sulfate ion content of 1% by mass or lower.

Mg-Al LDHs are nanoparticles having a structure in which hydroxide basic layers ([Mg²⁺₁₋ₓAl³⁺ₓ(OH)₂]) and intermediate layers ([(Alⁿ⁻)_{x/n}·yH₂O]) constituted of interlayer anions (Anⁿ⁻) and interlayer water are stacked alternately. Mg-Al LDHs are non-stoichiometric compounds in which the hydroxide basic layer has positive charges corresponding to x, and anions having negative charges compensating the positive charges present between layers thereof.

Mg-Al LDHs are present also as clay minerals produced naturally, but general are ones synthesized by known methods.

By contacting a Mg-Al LDH with acid gas, acidic substances such as hydrogen chloride, sulfur oxide and nitrogen oxide can be intercalated, with the hydroxide basic layer being held. Ion exchange of interlayer anions with anions originated from the acidic substances leads to exhibiting an adsorption capability to the acidic substances. The adsorption capability to the acidic substances reduces along with decreases in the interlayer anions due to the progression of ion exchange, and the acid gas treatment agent using the Mg-Al LDH breaks through.

The Mg-Al LDH of the acid gas treatment agent after breakthrough can be regenerated and reused by anion exchange with the interlayer anions by a known method.

From the viewpoints of the good adsorption capability of the Mg-Al LDH to acidic substances, the easiness in repeated use thereof by the regeneration and the like, it is preferable that the Mg-Al LDH is of carbonate type or hydroxide type, in which the interlayer anions are carbonate ions or hydroxide ions.

Then, from the viewpoints of the ion (anion) exchange capacity of the interlayer anions and the solid solubility limit of aluminum ions being trivalent metal ions, the element molar ratio (Mg/Al molar ratio) of Mg to Al of the Mg-Al LDH is preferably 2 to 3, more preferably 2 to 2.8 and still more preferably 2 to 2.5.

The acid gas treatment agent of the present invention has, due to that the mean pore size and the sulfate ion content of the Mg-Al LDH are in predetermined ranges, a high adsorption capability to acidic substances and a long breakthrough time.

With regard to the mean pore size, specifically, that as measured by a nitrogen gas adsorption method is 30 nm or larger, and preferably 31 nm or larger and more preferably 32 nm or larger.

The mean pore size by the nitrogen gas adsorption method can be determined as 4V/A from a specific surface area A determined by the BET one-point method and a one-point method total pore volume V from an adsorption isotherm for the Mg-Al LDH. Specifically, the mean pore size is determined by measurement using a specific surface area/pore distribution measurement device.

The mean pore size of the Mg-Al LDH and the adsorption capability thereof to acidic substances are correlated; and due to that the mean pore size is 30 nm or larger, entry of acidic substances into adsorption sites between layers of the Mg-Al LDH becomes easy, enhancing the adsorption capability to the acidic substances.

The upper limit of the mean pore size is, from the practical viewpoint, preferably 50 nm or smaller, more preferably 48 nm or smaller and still more preferably 45 nm or smaller.

A method for controlling the mean pore size of the Mg-Al LDH is not especially limited. Enlargement of the mean pore size to 30 nm or larger can be carried out, for example, by a mechanochemical method or the like; and specific examples thereof include a method in which a Mg-Al LDH is contacted with water and then, dried, and pulverized and mixed by a mechanochemical method. Since application of a mechanical stress to the Mg-Al LDH deforms and enlarges some pores, the mean pore size can be enlarged.

Examples of the pulverization method include methods using a cone crusher, a roll crusher, a cutter mill, an autogenous mill, a stamp mill, a stone mill or the like. In the case where the amount of the Mg-Al LDH to be pulverized is small, a household coffee mill can also be used.

The sulfate ion content of the Mg-Al LDH in the acid gas treatment agent of the present invention is 1% by mass or lower, and preferably 0.9% by mass or lower and more preferably 0.8% by mass or lower.

The sulfate ion content is determined by conversion from an element analytical value of sulfur element by an X-ray fluorescence analysis. Then, the sulfate ions in the Mg-Al LDH may be contained, for example, as sulfate ions originated from raw materials for the production of the Mg-Al LDH.

The sulfate ion content of the Mg-Al LDH and the adsorption capability thereof to acidic substances are correlated, and sulfate ions present between layers of the Mg-Al LDH inhibit adsorption of acidic substances. Due to that the sulfate ion content is 1% by mass or lower, anion exchange of interlayer anions with anions originated from acidic substances is easy; the enhancement of the adsorption capability to acidic substances is remarkable; and the breakthrough time of the acid gas treatment agent becomes long.

A method for controlling the sulfate ion content of the Mg-Al LDH is not especially limited. Examples of a method for lowering the sulfate ion content to 1% by mass or lower include a method comprising contacting the Mg-Al LDH with a sodium carbonate aqueous solution to replace sulfate ions contained in the Mg-Al LDH with carbonate ions. The contact with the sodium carbonate aqueous solution is preferable because the pore size of the Mg-Al LDH can be enlarged by actions including hydration swelling.

In the case where the Mg-Al LDH is contacted with a sodium carbonate aqueous solution, after the contact and drying of the Mg-Al LDH, it is preferable to control the mean pore size by pulverization and mixing using a mechanochemical method or the like. Since the Mg-Al LDH is liable to become massive in a wet state, only once carrying out pulverization after the Mg-Al LDH is put in a fully dried state is reasonable as a process controlling the mean pore size and the sulfate ion content.

Then, in the Mg-Al LDH in the acid gas treatment agent of the present invention, from the viewpoint of the flow efficiency of acid gas, it is preferable that the cumulative volume 50% particle diameter D50 is 13.0 to 16.0 µm, and the ratio (D90/D10) of the cumulative volume 90% particle diameter D90 to the cumulative volume 10% particle diameter D10 is 55 to 75. In the Mg-Al LDH, it is more preferable that the D50 is 13.5 to 15.5 µm, and the D90/D10 is 60 to 70.

Here, the D50, D10 and D90 are determined from a volume-base particle size distribution measured by a laser diffraction/scattering particle size analyzer. Specifically, the measurement can be carried out by a method described in Examples.

The form of the acid gas treatment agent of the present invention is not especially limited as long as the mean pore size and the sulfate ion content of the Mg-Al LDH are in the above-mentioned ranges prescribed in the present invention.

The acid gas treatment agent of the present invention may be processed suitably from the viewpoints of its use mode, its handling easiness and the like, or may be granulated to granules by a known method such as an extrusion granulation method. The acid gas treatment agent may also be used, for example, as molded articles such as pellets and globular particles molded by using a binder and the like. That is, the molded article of the present invention comprises the acid gas treatment agent.

The particle size of the molded article is, from the viewpoint of the handling easiness, preferably 1 to 5 mm, more preferably 2 to 4 mm and still more preferably 2.5 to 3.5 mm.

Here, the particle size of the molded article, in the case of being globular, corresponds to its diameter; and in the case of being pellet-like, that means a length of a portion at which the distance between two parallel plates becomes the maximum when the pellet is put between the plates (the maximum distance between the two plates). A molded article of 1 to 5 mm in particle size is a granulated material not passing through a sieve of 1 mm in opening thereof and passing through a sieve of 5 mm in opening thereof on being sieved.

The method for treating acid gas of the present invention contacts the above-mentioned acid gas treatment agent or molded article of the present invention with the acid gas containing acidic substances to reject the acidic substances.

The acidic substances are not especially limited, and for example, as described above, in the case of hydrogen chloride, sulfur oxide, nitrogen oxide and the like, these acidic substances can suitably be adsorbed to the acid gas treatment agent or molded article of the present invention and rejected.

Then, due to that in the acid gas treatment agent of the present invention, as described above, the Mg-Al LDH has a mean pore size and a sulfate ion content in predetermined ranges, the excellent advantageous effects of the present invention are exhibited, but for example, the acid gas treatment agent can be used with an LDH or the like constituted of other metal elements having an adsorption capability to acidic substances.

### Examples

Hereinafter, the present invention will be described specifically based on Examples. The present invention is not limited to the following Examples and various modifications may be made without departing from the gist of the present invention.

### [Analysis of samples]

For samples of the following Example and Comparative Examples, the mean pore size and the sulfate ion content were measured as follows.

### (Mean pore size)

The mean pore size was measured by a nitrogen gas adsorption method using a specific surface area/pore distribution measurement device ("BELSORP(registered trademark)-mini", manufactured by MicrotracBEL Corp.).

### (Sulfate ion content)

The sulfate ion content was determined by carrying out an element analysis by an X-ray fluorescence analyzer and converting the sulfur element content to the sulfate ion content.

### (Cumulative volume 50% particle diameter D50, cumulative volume 90% particle diameter D90 and cumulative volume 10% particle diameter D10)

The D50 and D90/D10 were determined by adding a sample powder to a sample circulator, in which a 0.025 % by mass sodium hexametaphosphate aqueous solution was circulated, of a laser diffraction/scattering particle size analyzer ("MT-3300 EXII", manufactured by MicrotracBEL Corp.) (transmittance: 80 to 95%), and measuring the volume base particle size distribution by the analyzer.

### [Preparation of samples]

### (Example 1)

8.6 g of sodium carbonate was dissolved in 1 L of ion-exchanged water and heated at 70°C to prepare a sodium carbonate aqueous solution. 100 g of a Mg-Al LDH (1) (manufactured by Sakai Chemical Industry Co. Ltd., Mg/Al molar ratio: 2) was added to the sodium carbonate aqueous solution, and stirred and mixed at 70°C for 1 hour. The obtained mixed slurry was filtered; and a solid content on a filter paper was washed with ion-exchanged water until the conductivity of the washing water became 100 µS/cm or lower. The water-washed solid content was dried at 105°C and thereafter, pulverized for 30 s by a household coffee mill to thereby obtain a Mg-Al LDH (2) as a sample (mean pore size: 32.0 nm, sulfate ion content: 0.55% by mass, D50: 14.5 µm, D90/D10: 65.8).

### (Comparative Example 1)

The Mg-Al LDH (1) used in Example 1 was used untreated as a sample (mean pore size: 28.5 nm, sulfate ion content: 2.76% by mass, D50: 30.2 µm, D90/D10: 81.0).

### (Comparative Example 2)

The Mg-Al LDH (1) used in Example 1 was pulverized for 30 s by a household coffee mill to obtain a Mg-Al LDH (3) as a sample (mean pore size: 29.5 nm, sulfate ion content: 2.75% by mass, D50: 12.0 µm, D90/D10: 48.7).

### [Test of acid gas adsorption]

0.15 g of a sample was placed in a reaction tube (inside diameter: 17 mm) packed with glass wool, and glass wool was put thereon to prepare a reaction tube charged with the sample so as to have air permeability. The reaction tube was heated in a tubular electric furnace at a set temperature of 150°C. A hydrogen chloride gas was made to flow downward in the reaction tube (linear velocity: 1.0 m/min) under control of the amount of the gas to be supplied by a mass flow controller so that the concentration of the hydrogen chloride gas became 300 ppm by mass (balance gas: nitrogen).

The concentration of the hydrogen chloride gas at the reaction tube outlet port was measured by an infrared spectrometer for gas analysis.

Fig. 1 shows breakthrough curves of the samples where the abscissa indicates the flow time of the hydrogen chloride gas, and the ordinate indicates the ratio (outlet port concentration Cₒᵤₜ/inlet port concentration Cᵢₙ) in the hydrogen chloride gas concentrations of the outlet port to the inlet port of the reaction tube.

As is clear from Fig. 1, whereas the samples of Comparative Examples 1 and 2 had a breakthrough time of less than 60 min, the sample of Example 1 had that of 110 min or longer. The sample of Example 1 had a lower ratio of the concentration of the hydrogen chloride gas at the outlet port of the reaction tube than the ratios of the samples of Comparative Examples 1 and 2; accordingly, it was verified that the sample of Example 1 has a higher adsorption capability to the hydrogen chloride gas than the samples of Comparative Examples 1 and 2.

## Claims

1. An acid gas treatment agent, comprising a Mg-Al layered double hydroxide having a mean pore size of 30 nm or larger as measured by a nitrogen gas adsorption method and a sulfate ion content of 1% by mass or lower.

2. The acid gas treatment agent according to claim 1, wherein the Mg-Al layered double hydroxide is of carbonate type or hydroxide type.

3. The acid gas treatment agent according to claim 1, wherein an element molar ratio of Mg to Al of the Mg-Al layered double hydroxide is 2 to 3.

4. The acid gas treatment agent according to claim 1, wherein the Mg-Al layered double hydroxide has a cumulative volume 50% particle diameter D50 of 13.0 to 16.0 µm and a ratio (D90/D10) of a cumulative volume 90% particle diameter D90 to a cumulative volume 10% particle diameter D10 of 55 to 75.

5. A molded article, comprising the acid gas treatment agent according to claim 1.

6. A method for treating acid gas, comprising contacting the acid gas treatment agent according to claim 1 or the molded article according to claim 5 with an acid gas comprising an acidic substance to reject the acidic substance.
